# EUROPÄISCHE PATENTSCHRIFT

(11) **EP 1 350 734 B1**
(45) Veröffentlichungstag und Bekanntmachung des Hinweises auf die Patenterteilung: **23.11.2005**
(21) Anmeldenummer: 03003516.6
(22) Anmeldetag: 15.02.2003
(51) Int. Cl.: B65D 51/14, B65D 23/00, A47G 19/14, A47J 45/06

(54) **Verbinden einer Kunststoffarmatur auf einem Glasbehälter**
Connecting a plastic fitting to a glass container
Connexion d'un raccord à un containeur en verre

(30) Priorität: 01.03.2002 DE 10209107
(43) Veröffentlichungstag der Anmeldung: 08.10.2003
(73) Patentinhaber: Schott AG, 55122 Mainz (DE)
(72) Erfinder: Becker, Roland, 55128 Mainz (DE)
(74) Vertreter: Koch-Huld, Annegret Christa

(56) Entgegenhaltungen:
- GB-A- 2 362 804
- US-A- 4 090 648
- US-A- 5 110 016
- US-A- 5 224 634

## Beschreibung

Die Erfindung betrifft eine Verbindung einer Kunststoffarmatur auf einem Glasbehälter, im einzelnen mit den Merkmalen aus dem Oberbegriff des Anspruches 1. Eine derartige Verbindung ist beispielsweise aus GB-A-2 362 804 bekannt.

Verbindungen einer Kunststoffarmatur mit einem Glasbehälter sind in einer Vielzahl von Ausführungen für unterschiedliche Anwendungsfälle bekannt. Ein wesentliches Einsatzgebiet, bei welchem derartige Verbindungen hohen Beanspruchungen unterworfen sind, sind Glasbehälter zur Aufnahme und zum Transport von Flüssigkeiten mit sehr hohen oder schwankenden Temperaturen, wie z.B. Kaffee- oder Teekannen. Die Kunststoffarmatur derartiger Behälter ist dabei als Gießelement oder Schüttrand ausgeführt, welches bzw. welcher die Wand des Glasbehälters im Öffnungsbereich umschließt und am Glasbehälter befestigt ist. Als Werkstoff findet in der Regel Polypropylen Verwendung. Die Befestigung erfolgt dabei gemäß einer ersten Ausgestaltung mechanisch in der Regel durch Kraftschluß. Aufgrund der unterschiedlichen Werkstoffe der sich berührenden Elemente -Glasbehälter und Kunststoffarmatur- und deren unterschiedliche Wärmeausdehnungskoeffizienten führt diese Art der Befestigung häufig zum Glasbruch. Zur Lösung dieses Problems wurde auf die mechanische Kopplung verzichtet und auf eine stoffschlüssige Verbindung zwischen Glasbehälter und Kunststoffarmatur durch Kleben zurückgegriffen. Die Problematik dieser Verbindungen besteht jedoch im schlechten Klebeverhalten von Polypropylen, welches zwar durch eine aufwendige und teure Vorbehandlung des Kunststoffes verbessert werden kann, allerdings bei gängigen Temperaturen der Füllmedien für den Glasbehälter von >70° C trotzdem nur unbefriedigende Ergebnisse in Bezug auf die Festigkeit der Verbindung liefert und damit auch ein Sicherheitsrisiko darstellt.

Der Erfindung liegt daher die Aufgabe zugrunde, eine dauerhaft sichere Verbindung einer Kunststoffarmarmatur auf einem Glasbehälter zu schaffen, welche unabhängig vom Anwendungsfall und den gewählten Werkstoffen für die Kunststoffarmatur ist. Die Lösung soll sich dabei durch einen geringen Fertigungs- und Montageaufwand auszeichnen und kostengünstig sein. Aufwendige Vorbehandlungen des Kunststoffes sind zu vermeiden.

Die erfindungsgemäße Lösung ist durch die Merkmale des Anspruches 1 charakterisiert. Vorteilhafte Ausgestaltungen sind in den Unteransprüchen wiedergegeben.

Die erfindungsgemäße Verbindung einer Kunststoffarmatur auf einem Glasbehälter ist durch eine formschlüssige Verbindung zwischen der Kunststoffarmatur und einem geschlitzten Umschlingungselement, welches den Glasbehälter im Öffnungsbereich in einem Bereich geringeren Querschnittes als an der Öffnung außen umschließt, charakterisiert. Unter Öffnungsbereich wird dabei der Bereich im Anschluß an die Öffnung verstanden, welcher gegenüber dem restlichen Glasbehälter hinsichtlich der Querschnittsfläche verjüngend ausgeführt ist. Das Umschlingungselement ist dabei hinsichtlich seiner Geometrie und Abmessungen derart dimensioniert, daß sein Innenumfang größere Abmessungen aufweist als der Außenumfang im Bereich geringeren Querschnittes des Öffnungsbereiches, jedoch geringere Abmessungen als im daran anschließenden Bereich des Öffnungsbereiches bis zur Öffnung. Am Außenumfang des Umschlingungselements sind eine in Umfangsrichtung verlaufende, vorzugsweise umlaufende Ausnehmung oder eine Mehrzahl von in Umfangsrichtung in bestimmten Abständen zueinander angeordneten Ausnehmungen angeordnet. Diese wirken erfindungsgemäß formschlüssig mit dazu komplementär ausgeführten Vorsprüngen am Innenumfang der Kunststoffarmatur, insbesondere in Form einer Schnappverbindung zusammen. Die Kunststoffarmatur weist dazu zwei, in Einbaulage die Wand des Glasbehälters im Öffnungsbereich in Umfangsrichtung beidseitig umschließende Wände auf, welche auch als Lippen bezeichnet werden können und die integraler Bestandteil der Kunststoffarmatur sind. Diese sind am Innenumfang angeordnet und zum Glasbehälter hin gerichtet ausgeführt. Die erste innere Wand ist in Einbaulage in der Öffnung angeordnet, die zweite äußere Wand umschließt die Wand des Glasbehälters im Öffnungsbereich außen. Die Befestigung der Kunststoffarmatur erfolgt somit indirekt, d.h. nicht unmittelbar an den Wänden des Glasbehälters, sondern über das Umschlingungselement, welches wiederum an der Außenwand des Glasbehälters wenigstens mit einem Teil seiner Innenfläche anliegt. Der Vorsprung oder die Vorsprünge am Innenumfang der Kunststoffarmatur sind dabei an der zur Glasbehälterwand weisenden Innenfläche an der zweiten äußeren Wand angeordnet. Diese Art der Verbindung verhindert es, daß die bei Aufnahme und Transport von Füllmedien mit hohen Temperaturen, beispielsweise über 70°C, aufgrund der unterschiedlichen physikalischen Eigenschaften von Glas und Kunststoff auftretenden unterschiedlichen Wärmeausdehnungen durch den nicht mehr vorhandenen direkten Kontakt zwischen Glasbehälter und Kunststoffarmatur zum Bruch des Glasbehälters führen.

Die Auswahl des Werkstoffes und die geometrische Dimensionierung des Umschlingungselementes sind derart gewählt, daß eine leichte Montage durch Überziehen des Umschlingungselementes über die Wand des Glasbehälters im Öffnungsbereich durch geringfügiges Aufbiegen des Umschlingungselementes erfolgen kann.

Die Wand des Glasbehälters weist zur Vermeidung unnötiger Spannungen aufgrund der Formgebung wenigstens im Öffnungsbereich einen kreisrunden oder ovalen Querschnitt auf. Gemäß einer besonders vorteilhaften Ausgestaltung ist der gesamte Glasbehälter im Querschnitt kreisförmig ausgebildet. Das Umschlingungselement ist hinsichtlich seiner Form an die Form des Öffnungsbereiches angepasst und weist einen Schlitz in Umfangsrichtung auf. Das Umschlingungselement ist ringförmig und weist aus Montagegründen einen Schlitz auf, d.h. der Ring ist in Umfangsrichtung unterbrochen.

Die Ausnehmung am Umschlingungselement verläuft aus Fertigungsgründen vorzugsweise um den gesamten Umfang und ist als Nut ausgebildet, welche in Einbaulage des Umschlingungselementes im wesentlichen horizontal bzw. in einem Winkel, vorzugsweise jedoch quer zur Führungsrichtung der Kunststoffarmatur bei Erzeugung derVerbindung mit dem Glasbehälter ausgerichtet ist.

Zur Vereinfachung der Montage sind an der Kunststoffarmatur, insbesondere der zweiten äußeren Wand, vorzugsweise wenigstens drei in Umfangsrichtung einander benachbart angeordnete Vorsprünge vorgesehen, welche in eine umlaufende Nut am Umschlingungselement eingreifen. Zur gleichmäßigen Lastverteilung sind die Vorsprünge in gleichmäßigen Abständen in Umfangsrichtung angeordnet . Eine Ausführung mit in Umfangsrichtung benachbart zueinander angeordneten Ausnehmungen in geringer Anzahl am Umschlingungselement und Vorsprüngen an der zweiten äußeren Wand kann zur Lagefixierung zwischen beiden zueinander in Umfangsrichtung genutzt werden.

Der umlaufende Vorsprung oder die Vorsprünge sind einteilig mit der Wand der Kunststoffarmatur ausgeführt, d.h. an diese angeformt.

Theoretisch bestünde auch die Möglichkeit, die Träger von Ausnehmung bzw. Nut und Vorsprung zu vertauschen, d.h. die Nut an der Kunststoffarmatur, insbesondere der zweiten Wand vorzusehen und den oder die Vorsprünge am Umschlingungselement. Allerdings kommt dieser Lösung in der Praxis nur geringe Bedeutung zu, da der Fertigungsaufwand größer ist und die zweite Wand mit einer unnötig starken Wandstärke ausgebildet werden müßte.

Die erste innere Wand ist hinsichtlich des gewählten Werkstoffes und/oder ihrer geometrischen Abmessungen, insbesondere hinsichtlich des Verhältnisses von Höhe und Wandstärke vorzugsweise derart gestaltet, daß diese im Einbauzustand im zum Glasbehälterinnenraum weisenden Endbereich elastisch an der Innenwand des Glasbehälters im Öffnungsbereich zum Anliegen kommt. In Abhängigkeit von der Größe der Kraft, mittels welcher die Wand gegen die Innenwand gedrückt wird, kann hier bereits eine Dichtwirkung zwischen Glasbehälterinnenraum und Umgebung in beiden Richtungen erzielt werden.

Gemäß einer vorteilhaften Weiterentwicklung ist jedoch eine umlaufende Dichtung zwischen einer zur Wand des Behälters weisenden Wand einer Lippe und der Wand des Behälters vorgesehen. Diese Berührungsdichtung dient der Abdichtung des Glasbehälterinnenraumes gegenüber der Umgebung über den Zwischenraum zwischen der Wand des Glasbehälters, den die Wand des Glasbehälters im Öffnungsbereich umschließenden Wänden - erste Wand und zweite Wand- und dem ringförmigen Element und umgekehrt.

Die Anordnung der Dichtung kann
a) zwischen dem Außenumfang der Glasbehälterwand und äußerer Wand an der Kunststoffarmatur in Einbaulage zwischen dem Innenumfang der Kunststoffarmatur und den zu diesem weisenden Flächen am Umschlingungselement, d.h. oberhalb des Umschlingungselementes oder
b) dem Innenumfang des Glasbehälters im Öffnungsbereich und der ersten inneren Wand
erfolgen. Vorzugsweise wird aus Montagegründen die Variante b) gewählt.

Die umlaufende Dichtung kann als separates Element oder integrale Baueinheit mit der Kunststoffarmatur ausgeführt sein. Vorzugsweise wird eine einteilige Ausführung gewählt, vorzugsweise in Form von angeformten Dichtlippen. Besonders vorteilhaft ist die Anformung an der ersten inneren Wand bei elastischer Ausgestaltung dieser, da durch diese Maßnahme ein optimales Anliegen der Dichtflächen - Dichtlippe und Innenumfang des Glasbehälters im Öffnungsbereich - aufeinander erzielt wird.

Gemäß der Erfindung wird der Zwischenraum zwischen der Wand des Glasbehälters, den die Wand des Glasbehälters im Öffnungsbereich umschließenden Wänden der Kunststoffarmatur und dem ringförmigen Element mit einem Füllmedium befüllt. Dieses dient zur zusätzlichen Stabilisierung der Lage der Kunststoffarmatur gegenüber der Wand des Glasbehälters, der Abdichtung des Zwischenraumes gegenüber dem Innenraum des Glasbehälters und der Erhöhung der Festigkeit der Verbindung. Vorzugsweise wird zur Erhöhung der Festigkeit der Verbindung als Füllmedium ein Stoff mit guten adhesiven Eigenschaften verwendet, beispielsweise ein Klebstoff oder Silikon. Bei Verwendung von Klebern sind keine besonderen Anforderungen hinsichtlich der Lage der einzelnen Elemente - Wand des Glasbehälters im Öffnungsbereich und erste innere Wand und zweite äußere Wand der Kunststoffarmatur - zueinander zu stellen, da Zwischenräume vollständig vom Kleber ausgefüllt werden können und diese im gehärteten Zustand mit dem Füllmedium aufgrund der ohnehin geforderten Eignung für Lebensmittel in Berührung kommen können. Je nach erwünschter Festigkeit bzw. Dichtigkeit empfiehlt es sich dabei, beispielsweise einen Ein- oder einen Zwei-Komponentigen Silikonkleber (Silikonkleber wegen der verschiedenen Ausdehnungskoeffizienten der Materialkomponenten) in Verbindung mit einem gut klebbaren Kunststoff (ABS, PC oder ähnl.) zu benutzen. Ist weder die Festigkeit noch die Dichtigkeit von großer Bedeutung, kann als Werkstoff beispielsweise ein PP oder minderwertiges Kunststoff bzw. für die Dichtigkeit ein Füllstoff oder eine Gummidichtung verwendet werden. Die Kunststoffarmatur besteht im einfachsten Fall aus der ersten inneren Wand, der zweiten äußeren Wand und dem Verbindungsstück zwischen beiden. Denkbar sind jedoch auch noch weitere Modifikationen, beispielsweise die Ausgestaltung am Außenumfang mit Funktionselementen wie Ausgüssen, Henkeln etc. und/oder zusätzlich weiteren Wänden zur ästhetischen Ausgestaltung - beispielsweise die Anpassung an die Oberfläche des Glasbehälters.

Die erfindungsgemäße Lösung, insbesondere mit zusätzlichem Stoffschluß bietet den Vorteil der Schaffung einer dauerhaften und auch belastbaren Verbindung, welche nur durch Zerstörung der Einzelkomponenten gelöst werden kann. Die erfindungsgemäße Lösung ist allgemein für Verbindungen einer beliebigen Kunststoffarmatur auf einem Glasbehälter geeignet. Besonders vorteilhaft ist der Einsatz in einer Kaffee- oder Teekanne oder Wasserkochergläsern.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung den Grundaufbau der einzelnen Elemente der Verbindung;
- Figuren 2a und 2b: zeigen in einer Ansicht gemäß Figur 1 den Zustand in Einbaulage nach den einzelnen Montageschritten;
- Figur 3a: zeigt eine Verbindung mit zusätzlichen Dichtmaßnahmen;
- Figure 3b: verdentlicht die erfindungsgemäße Verbindung.

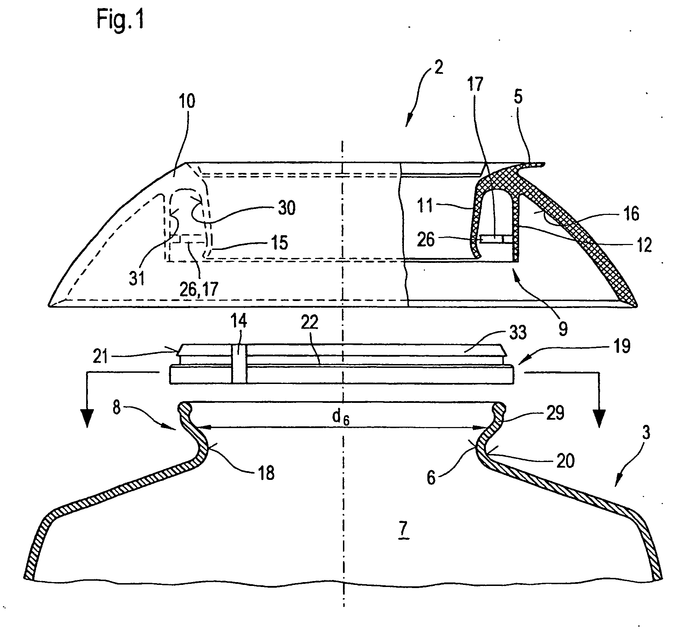

Die Figur 1 verdeutlicht in schematisch stark vereinfachter Darstellung anhand von Seitenansichten und zum Teil Axialschnitten den Grundaufbau der einzelnen Elemente zur Realisierung einer dauerhaften Verbindung 1 einer Kunststoffarmatur 2 auf einem Glasbehälter 3 in einer Ansicht des Zustandes vor der Montage. Handelt es sich bei einem Glasbehälter 3 um eine Kaffee- oder Teekanne 4, ist die Kunststoffarmatur 2 in Form eines Gießringes oder Schüttrandes 5 ausgeführt. Entsprechend des Einsatzzweckes des Glasbehälters 3 kann die Kunststoffarmatur 2 auch andere Formen einnehmen.

Der Glasbehälter 3 weist eine Öffnung 6 zur Aufnahme und Ausgabe von Füllmedium in bzw. aus dem Innenraum 7 des Glasbehälters 3 auf. Der Glasbehälter 3 ist im Bereich der Öffnung mit einem geringeren Durchmesser d₆ gegenüber dem restlichen Innenraum 7 ausgestaltet. Der Bereich, in welchem die Öffnung 6 angeordnet ist, fungiert als Aufnahme- und/oder Abgabebereich und wird als Öffnungsbereich 8 bezeichnet. Dieser erstreckt sich in Funktionslage des Glasbehälters 3 in der Regel in vertikaler Richtung. Andere Richtungen sind ebenfalls denkbar. Die Fixierung der Kunststoffarmatur 2, beispielsweise in Form eines Gießringes oder Schüttrandes 5 erfolgt dabei im Öffnungsbereich 8. Der Gießring oder Schüttrand 5 besteht aus Kunststoff und umschließt die Wand 29 des Glasbehälters 3 im Öffnungsbereich 8 beidseitig in Umfangsrichtung. Die Kunststoffarmatur 2 kann bezüglich der Geometrie unterschiedlich ausgestaltet sein. Diese weist jedoch vorzugsweise im Umschließungsbereich eine Innenwandgeometrie auf, die ein Umschließen des Öffnungsbereiches 8 ermöglicht. Zu diesem Zweck sind in Einbaulage betrachtet am Innenumfang 16 zwei hohlzylindrisch sich zum Glasbehälter 3 erstreckende Wände 11 und 12 vorgesehen, welche bei entsprechend geringer Wandstärke auch als Lippe bezeichnet werden können, wobei diese an der Kunststoffarmatur 2 angeformt sind. Die erste hohlzylindrisch, sich zum Glasbehälter hin erstreckende Wand 11 ist durch größere deren Außenumfang 30 charakterisierende Abmessungen als der Innenumfang 18 des Glasbehälters 3 im Öffnungsbereich 8 charakterisiert. Die zweite sich zum Glasbehälter hin erstreckende Wand 12 umschließt den Glasbehälter 3 am Außenumfang 20 im Öffnungsbereich 8. Beide Wände sind in vertikaler Richtung im oberen Bereich 10 über den Innenumfang 16 miteinander verbunden und begrenzen einen Zwischenraum 13. Ferner weist die Kunststoffarmatur 2 zur Fixierung in vertikaler Richtung eine Einrichtung zur Lagefixierung und Befestigung 9 auf. Diese umfaßt wenigstens einen umlaufenden einteilig mit der Kunststoffarmatur 2 ausgeführten Vorsprung 26 oder eine Vielzahl von einzelnen in Umfangsrichtung benachbart zueinander angeordneten Vorsprüngen 26, welche auch als Segmente 17 bezeichnet werden können, und die am Innenumfang 31 der zweiten sich in vertikaler Richtung zum Glasbehälter 3 hin erstreckenden Wand 12 angeordnet sind und sich in Richtung zur Wand 29 des Glasbehälters 3 in Einbaulage erstrecken. Ferner umfaßt die Einrichtung 9 ein Umschlingungselement 19, welches den Glasbehälter 3 im Öffnungsbereich 8 in einem Bereich geringerer Außenabmessungen 32 als an der Öffnung 6 in Einbaulage umschließt. Das Umschlingungselement 19 ist zu diesem Zweck geschlitzt, d.h. mit einer Unterbrechung 14 in Umfangsrichtung versehen, um das Umschlingungselement 19 in die Einbaulage zu bringen, d.h. über den Öffnungsbereich 8 aufzuziehen. Die Innenabmessungen des Umschlingungselementes 19 sind derart gewählt, daß dieses in Einbaulage nicht ohne Aufspreizung des Umschlingungselementes 19 über den Öffnungsbereich 8 vom Glasbehälter verschoben werden kann. Vorzugsweise sind der Glasbehälter 3 und der Öffnungsbereich 8 mit kreisförmigen Querschnitt ausgebildet. Das Umschlingungselement 19 ist dann als ringförmiges Element 33 ausgeführt. Dieses weist zur Realisierung eines Formschlusses mit dem als umlaufendes Segment 17 oder einer Vielzahl von Segmenten 17 ausgebildeten Vorsprüngen 26 eine am Außenumfang 21 angeordnete, vorzugsweise in Umfangsrichtung sich über den gesamten Umfang erstreckende Nut 22 auf.

Die erste Wand 11 ist hinsichtlich ihrer geometrischen Ausgestaltung und Dimensionierung derart gewählt, daß diese in Einbaulage betrachtet berührend zumindest an einem Teil des Innenumfanges 18 im Öffnungsbereich 8 der Öffnung 6 anliegt.

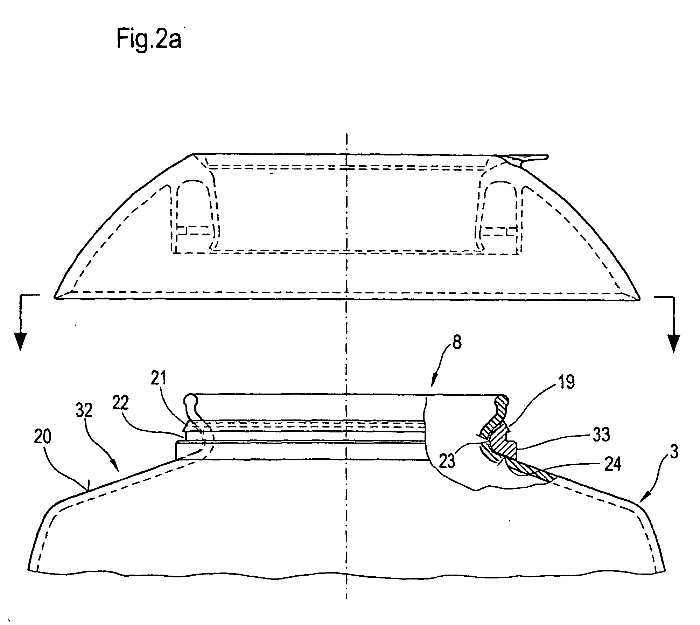

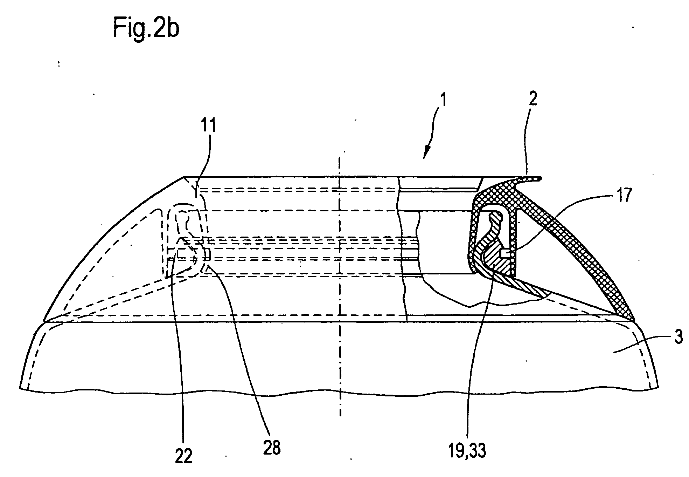

Figuren 2a und 2b verdeutlichen in schematisch vereinfachter Darstellung anhand von Axialschnitten die einzelnen Verfahrensschritte bei der Montage der Verbindung 1 zwischen einer Kunststoffarmatur 2 und dem Glasbehälter 3.

Figur 2a verdeutlicht dabei das Aufschieben des Umschlingungselementes 19, insbesondere des ringförmigen Elementes 33 auf den Glasbehälter 3 in den Bereich geringerer Außenabmessungen 32 des Öffnungsbereiches 8 im vollzogenen Zustand. In diesem ist zu erkennen, daß das die Nut 22 tragende ringförmige Element 33 hinsichtlich seiner Geometrie am Innenumfang 23 derart gestaltet ist, daß dieser mit wenigstens einem Teil der durch den Innenumfang 23 gebildeten Fläche 24 berührend am Außenumfang 20 des Glasbehälters 3 anliegt. Das ringförmige geschlitzte Element 33 ist vorzugsweise ebenfalls aus Kunststoff gefertigt.

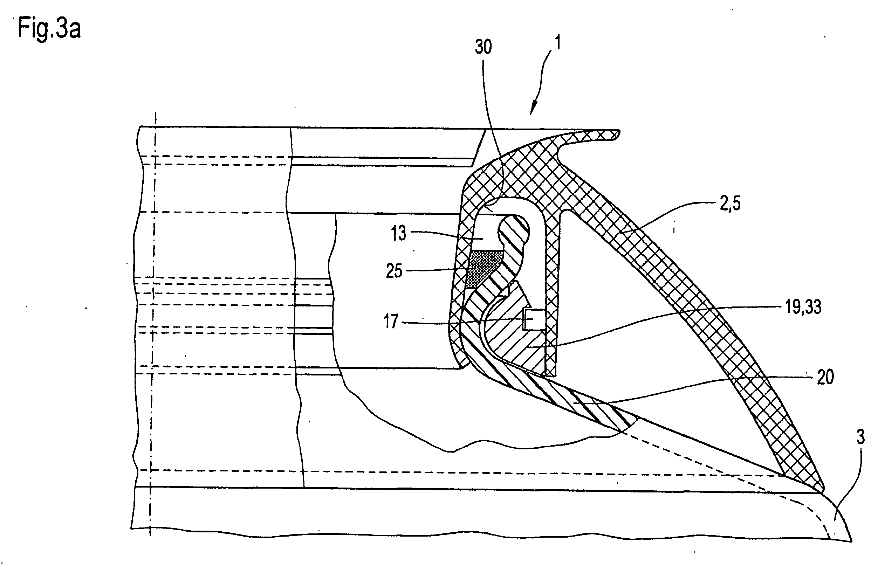

Die Figur 2b verdeutlicht in schematisch vereinfachter Darstellung anhand eines Axialschnittes den Zustand der Verbindung 1 zwischen der Kunststoffarmatur 2 und dem Glasbehälter 3 nach Aufschieben der Kunststoffarmatur 2 auf den Glasbehälter 3. Daraus wird ersichtlich, daß das Segment 17 in der Nut 22 im ringförmigen Element 33 einrastet und damit formschlüssig mit diesem verbunden wird. Das ringförmige Element 33 bildet aufgrund seiner Innengeometrie-Ausgestaltung eine Art Widerhaken gegenüber dem Teil des Öffnungsbereiches 8, welcher durch größere Außenabmessungen als der Bereich 32 charakterisiert ist. Die Kunststoffarmatur 2 stützt sich somit indirekt über das Umschlingungselement 19 am Glasbehälter 3 ab. Diese Verbindung 1 verhindert somit eine Lösung der Verbindung in vertikaler Richtung. Dies ist nur mit entsprechendem Kraftaufwand möglich. Zur Verhinderung des Übertrittes von Füllmedium aus dem Innenraum 7 des Glasbehälters 3 über die Verbindung 1 an die Umgebung ist die erste Wand 11 derart gestaltet, daß diese berührend am Innenumfang 18 im Öffnungsbereich 8 des Glasbehälters 3 anliegt. Dieser Bereich wird mit 28 bezeichnet. Die Wand 11 weist dazu elastische Eigenschaften auf, welche durch die Werkstoffwahl und/oder Dimensionierung der Wand 11 erzeugt werden. In der dargestellten Ausführung wird der Berührungsbereich 28 vom Endbereich 15 der ersten Wand 11 und dem Innenumfang 18 im Öffnungsbereich 8 des Glasbehälters 3 gebildet. Die Wand der Kunststoffarmatur 2 liegt ferner auf dem Glasbehälter 3 auf. Da zur Realisierung einer Dichtwirkung zwischen der Kunststoffarmatur 2 und dem Glasbehälter 3 entweder entsprechende Passungen zwischen den einzelnen miteinander zu verbindenden Elementen vorzusehen wären, die wiederum im befüllten Zustand des Glasbehälters bei entsprechend hohen Temperaturen des Füllmediums zu Spannungen in den einzelnen Elementen führen, die wiederum zu irreparablen Beschädigungen führen können, sind die einzelnen Passungen derart gewählt, daß auch im belasteten Zustand bei Auftreten derartiger Spannungen diese negativen Effekte vermieden werden. Daher ist es erforderlich, zwischen dem Glasbehälter 3 und der Kunststoffarmatur 2 eine Dichtung vorzusehen. Die Dichtwirkung wird dabei beispielsweise durch eine separate umlaufende Dichtung gemäß Figur 3a realisiert, welche mit 25 bezeichnet ist und als berührende Dichtung zwischen dem Innenumfang 18 des Glasbehälters im Öffnungsbereich 8 und dem Außenumfang 26 der Wand 11 angeordnet ist. Die berührende Dichtung kann dabei als Lippendichtung ausgeführt sein. Andere Möglichkeiten sind ebenfalls denkbar. Durch diese wird ein Übertritt von Füllmedium aus dem Innenraum 7 über die Verbindung 1, insbesondere den Zwischenraum 13 zwischen den beiden Wänden 11 und 12 an die Umgebung verhindert.

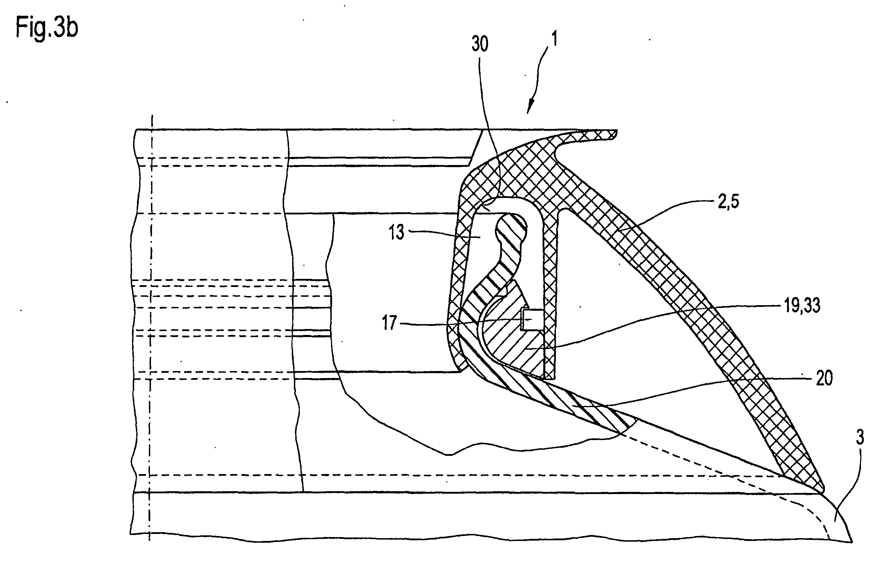

Die Figur 3b verdeutlicht demgegenüber die erfindungsgemäße Ausführungsmöglichkeit zur Realisierung der Dichtung zwischen der Kunststoffarmatur 2 und dem Glasbehälter 3. In diesem Fall wird der im Einbauzustand von ringförmigem Element 19 und Kunststoffarmatur 2 liegende Zwischenraum 13 zwischen der Wand des Glasbehälters 3 im Öffnungsbereich 8 und der Kunststoffarmatur 2, mit einem Füllmaterial oder einem Klebstoff befüllt. Dabei ist es wichtig, daß der Zwischenraum 13 durch den Berührungsbereich 28 zwischen dem Außenumfang 30 der ersten Wand 11 und dem Innenumfang 18 im Öffnungsbereich 8 begrenzt wird. Dadurch wird vermieden, daß Füllmaterial oder Klebstoff direkt mit dem Innenraum 7 bzw. dem im Innenraum 7 befindlichen Medium in Berührung kommen.

Die erfindungsgemäße Lösung ermöglicht die Schaffung einer dauerhaften Verbindung 1 zwischen einer Kunststoffarmatur 2 und einem Glasbehälter 3. Diese ist dadurch charakterisiert, daß diese auf der Grundlage einer kombinierten form- und bei Abstützung des Umschlingungselementes am Glasbehälter 3, insbesondere der Wand 20, kraftschlüssigen Verbindung oder aber einer kombinierten form- und stoffschlüssigen Verbindung realisiert werden. Diese Verbindung ist für Füllmedien des Glasbehälters mit sehr hohen Temperaturen geeignet, ohne daß aufgrund der dadurch entstehenden thermischen Ausdehnungen der Werkstoffe ein Glasbruch im Bereich der Verbindung mit der Kunststoffarmatur zu befürchten wäre. Die Lösung der Verbindung ist jedoch nur durch Zerstörung dieser möglich.

### Bezugszeichenliste

- 1: Verbindung einer Kunststoffarmatur auf einem Glasbehälter
- 2: Kunststoffarmatur
- 3: Glasbehälter
- 4: Kaffeekanne
- 5: Gießring oder Schüttrand
- 6: Öffnung des Glasbehälters
- 7: Innenraum des Glasbehälters
- 8: Öffnungsbereich
- 9: Einrichtung zur Lagefixierung und Befestigung
- 10: vertikal oberer Bereich
- 11: hohlzylindrisch, sich in vertikaler Richtung zum Glasbehälter hin erstreckende Wand
- 12: zweite hohlzylindrisch, sich in vertikaler Richtung zum Glasbehälter hin erstreckende Wand
- 13: Innenraum
- 14: Unterbrechung
- 15: Endbereich
- 16: Innenumfang der Kunststoffarmatur
- 17: Segment
- 18: Innenumfang des Glasbehälters
- 19: Umschlingungselement
- 20: Außenumfang des Glasbehälters im Öffnungsbereich 8
- 21: Außenumfang des ringförmigen Elementes 19
- 22: Nut
- 23: Innenumfang des ringförmigen Elementes 19
- 24: Fläche
- 25: Dichtung
- 26: Vorsprung
- 27 28: Berührungsbereich
- 29: Wand
- 30: Außenumfang erste Wand
- 31: Innenumfang zweite Wand
- 32: Bereich geringer Außenabmessungen
- 33: Ringförmiges Element
- d₆: Öffnungsdurchmesser ringförmigen Elementes 19
- s₁₂: Wandstärke der Wand 12
- s₁₁: Wandstärke der Wand 11

## Patentansprüche

1. Verbindung (1) einer Kunststoffarmatur (2) auf einem Glasbehälter (3), umfassend
einen Glasbehälter (3) mit einem eine Öffnung (6) tragenden Öffnungsbereich (8);
eine Kunststoffarmatur (2) mit zwei die Wand (20) des Glasbehälters (3) im Öffnungsbereich (8) beidseitig in Umfangsrichtung umschließenden Wänden (11, 12)- eine erste innere Wand (11) und eine zweite äußere Wand (12); wobei der Öffnungsbereich (8) einen Bereich geringerer Außenabmessungen am Außenumfang als an der Öffnung (6) aufweist;
ein in Umfangsrichtung unterbrochenes Umschlingungselement (19), welches den Öffnungsbereich (8) im Bereich geringeren Querschnittes umschließt und sich an der Wand (20) des Glasbehälters (3) abstützt, wobei die Kunststoffarmatur (2) formschlüssig mit dem Umschlingungselement (19) verbunden ist und
der Öffnungsbereich (8) des Glasbehälters (3) einen kreisrunden Querschnitt aufweist und das Umschlingungselement (19) als geschlitztes ringförmiges Element (33) ausgeführt ist, **dadurch gekennzeichnet, daß** der Zwischenraum (13) zwischen beiden Wänden (11) und (12), der Wand (20) des Glasbehälters (3) und dem Umschlingungselement (19) mit einem aushärtendem und an den Anschlusselementen haftendem Füllmedium befüllt ist.

2. Verbindung (1) nach Anspruch 1, **dadurch gekennzeichnet, daß** der Formschluß zwischen Umschlingungselement (19) und Kunststoffarmatur (2) durch zueinander komplementäre Ausnehmungen (22) und Vorsprünge (26, 17) am Umschlingungselement (19) und am Innenumfang der zweiten äußeren Wand (12) der Kunststoffarmatur (2) erzeugt wird.

3. Verbindung (1) nach Anspruch 2, **dadurch gekennzeichnet, daß** das Umschlingungselement (19) am Außenumfang eine in Umfangsrichtung verlaufende und um den Umfang erstreckende Nut (22) aufweist.

4. Verbindung (1) nach einem der Ansprüche 2 oder 3, **dadurch gekennzeichnet, daß** am Innenumfang der zweiten Wand (12) ein in Umfangsrichtung verlaufender und sich über den Umfang erstreckender Vorsprung (26) in Form eines Segmentes (17) vorgesehen ist.

5. Verbindung (1) nach einem der Ansprüche 2 oder 3, **dadurch gekennzeichnet, daß** am Innenumfang der zweiten Wand (12) wenigstens zwei in gleichmäßigen oder ungleichmäßigen Abständen zueinander in Umfangsrichtung angeordnete Vorsprünge (26) in Form von Segmenten (17) vorgesehen sind.

6. Verbindung (1) nach einem der Ansprüche 2 bis 5, **dadurch gekennzeichnet, daß** die Vorsprünge (26) einteilig mit der Kunststoffarmatur (2) ausgeführt sind.

7. Verbindung (1) nach einem der Ansprüche 1 bis 6, **dadurch gekennzeichnet, daß** die erste innere Wand (11) elastisch ausgeführt ist, so daß diese in Einbaulage mit wenigstens einem Teil ihrer Fläche am Außenumfang am Innenumfang des Glasbehälters (3) im Öffnungsbereich (8) anliegt.

8. Behältnis zur Aufnahme und Abgabe von Füllmedien, insbesondere Tee- oder Kaffeekanne oder Wasserkochglas;
mit einem Glasbehälter (3) mit wenigstens einer Öffnung (6);
mit einer der Öffnung (6) zugeordneten Kunststoffarmatur (2);
mit einer Verbindung (1) gemäß einem der Ansprüche 1 bis 7 der Kunststoffarmatur (2) auf dem Glasbehälter (3).

## Claims

1. Connection (1) of a plastics material fitting (2) to a glass container (3), comprising a glass container (3) with an opening region (8) bearing an opening (6), a plastics material fitting (2) with two walls (11, 12) enclosing the two sides of the wall (20) of the glass container (3) in the opening region (8) in the peripheral direction, a first inner wall (11) and a second outer wall (12), wherein the opening region (8) has a region with smaller outer dimensions on the outer periphery than on the opening (6); a wraparound element (19) which is interrupted in the peripheral direction and encloses the opening region (8) in the region of smaller cross-section and is supported on the wall (20) of the glass container (3), the plastics material fitting (2) being positively connected to the wraparound element (19) and the opening region (8) of the glass container (3) having a circular cross-section and the wraparound element (19) being designed as a slotted annular element (33), **characterised in that** the intermediate space (13) between the two walls (11) and (12), the wall (20) of the glass container (3) and the wraparound element (19) is filled with a filling medium which cures and adheres to the connection elements.

2. Connection (1) according to claim 1, **characterised in that** the positive fit between the wraparound element (19) and plastics material fitting (2) is produced by mutually complementary recesses (22) and projections (26, 17) on the wraparound element (19) and on the inner periphery of the second outer wall (12) of the plastics material fitting (2).

3. Connection (1) according to claim 2, **characterised in that** the wraparound element (19) on the outer periphery has a groove (22) running in the peripheral direction and extending around the periphery.

4. Connection (1) according to either of claims 2 or 3, **characterised in that**, at the inner periphery of the second wall (12), a projection (26) in the form of a segment (17) running in the peripheral direction and extending over the periphery is provided.

5. Connection (1) according to either of claims 2 or 3, **characterised in that**, at the inner periphery of the second wall (12), at least two projections (26) in the form of segments (17), which are arranged at equal or unequal distances from one another in the peripheral direction, are provided.

6. Connection (1) according to any one of claims 2 to 5, **characterised in that** the projections (26) are designed in one piece with the plastics material fitting (2).

7. Connection (1) according to any one of claims 1 to 6, **characterised in that** the first inner wall (11) is elastic in design, so that it rests, in the fitting position, with at least a part of its surface at the outer periphery, on the inner periphery of the glass container (3) in the opening region (8).

8. Container for receiving and dispensing filling media, in particular a tea or coffee pot or glass for boiling water, comprising a glass container (3) with at least one opening (6), a plastics material fitting (2) associated with the opening (6), and a connection (1) according to any one of claims 1 to 7 of the plastics material fitting (2) to the glass container (3).

## Revendications

1. Connexion (1) d'un raccord en plastique (2) à un conteneur en verre (3) comprenant :
un conteneur en verre (3) avec une zone d'ouverture (8) supportant une ouverture (6) ;
un raccord en plastique (2) avec deux parois (11, 12) entourant des deux côtés dans la direction périphérique la paroi (20) du conteneur en verre (3) dans la zone d'ouverture (8) - une première paroi intérieure (11) et une deuxième paroi extérieure (12) ; la zone d'ouverture (8) présentant une zone de dimensions extérieures moins importantes sur le périmètre extérieur qu'au niveau de l'ouverture (6) ;
un élément enveloppant (19) ininterrompu dans la direction périphérique entourant la zone d'ouverture (8) dans la zone de coupe transversale plus réduite et s'appuyant contre la paroi (20) du conteneur en verre (3) ;
le raccord en plastique (2) étant relié par complémentarité de forme à l'élément enveloppant (19) ;
la zone d'ouverture (8) du conteneur en verre (3) présentant une section transversale circulaire et l'élément enveloppant (19) étant configuré comme un élément annulaire (33) fendu, **caractérisée en ce que** l'interstice (13) situé entre les deux parois (11) et (12), la paroi (20) du conteneur en verre (3) et l'élément enveloppant (19) est rempli d'un moyen de remplissage durcissant et adhérant aux éléments de raccord.

2. Connexion (1) selon la revendication 1, **caractérisée en ce que** la complémentarité de forme entre l'élément enveloppant (19) et le raccord en plastique (2) est engendrée par des évidements (22) et des saillies (26, 17) complémentaires entre eux situés sur l'élément enveloppant (19) et au niveau du périmètre intérieur de la deuxième paroi extérieure (12) du raccord en plastique (2).

3. Connexion (1) selon la revendication 2, **caractérisée en ce que** l'élément enveloppant (19) présente au niveau de son périmètre extérieur une rainure (22) s'étendant dans la direction périphérique et sur tout le périmètre.

4. Connexion (1) selon l'une quelconque des revendications 2 ou 3, **caractérisée en ce qu'**une saillie (26) prenant la forme d'un segment (17) est prévue au niveau du périmètre intérieur de la deuxième paroi (12), ladite saillie s'étendant dans la direction périphérique et sur tout le périmètre.

5. Connexion (1) selon l'une quelconque des revendications 2 ou 3, **caractérisée en ce qu'**au moins deux saillies (26) prenant la forme de segments (17) sont prévues au niveau du périmètre intérieur de la deuxième paroi (12), lesdites saillies étant disposées à des distances égales ou inégales les unes par rapport aux autres dans la direction périphérique.

6. Connexion (1) selon l'une quelconque des revendications 2 à 5, **caractérisée en ce que** les saillies (26) sont configurées en une seule pièce avec le raccord en plastique (2).

7. Connexion (1) selon l'une quelconque des revendications 1 à 6, **caractérisée en ce que** la première paroi intérieure (11) est configurée de façon élastique, de manière à toucher dans sa position de montage, avec au moins une partie de sa surface située sur le périmètre extérieur, le périmètre intérieur du conteneur en verre (3) dans la zone d'ouverture (8).

8. Récipient pour mettre et enlever des moyens contenants, notamment une théière ou une cafetière ou un verre pour chauffer de l'eau ;
avec un conteneur en verre (3) présentant au moins une ouverture (6) ; avec un raccord en plastique (2) associé à l'ouverture (6) ;
avec une connexion (1) selon l'une quelconque des revendications 1 à 7 du raccord en plastique (2) au conteneur en verre (3).
